# DEMANDE DE BREVET EUROPEEN

(11) **EP 1 528 270 A1**
(43) Date de publication de la demande: **04.05.2005**
(21) Numéro de dépôt: 03024730.8
(22) Date de dépôt: 29.10.2003
(51) Int. Cl.: F16C 9/04, B23D 31/00, B21K 1/76, B23K 26/36

(54) **Procédé d'usinage laser pour la formation d'une zone d'amorce de rupture pour la séparation par cassure d'un composant, en particulier d'une bielle pour moteur à combustion interne et installation laser pour un tel usinage**

(71) Demandeur: LASAG AG, CH-3602 Thun (CH)
(72) Inventeur: Dürr, Ulrich, 2608 Allmendingen (CH)
(74) Mandataire: Surmely, Gérard

(57) **Abrégé**

L'invention concerne un procédé d'usinage au moyen d'une installation laser (2) d'une rainure (40), formant amorce de rupture pour un sectionnement mécanique ultérieur, dans une pièce (12), en particulier dans l'ouverture (10) d'une bielle. Le procédé prévoit de fournir en sortie d'une tête d'usinage (16; 18) un faisceau laser présentant une section transversale de forme ovale ou oblongue, la grande dimension de cette section étant prévue dans le plan de sectionnement de la pièce usinée. La rainure usinée peut ainsi présenter une faible largeur et être traversante selon sa direction longitudinale sur la majeure partie de sa profondeur. L'invention concerne également une installation d'usinage laser agencée pour mettre en oeuvre ce procédé d'usinage.

## Description

La présente invention concerne un procédé d'usinage laser d'une rainure, formant amorce de rupture pour un sectionnement mécanique ultérieur, dans une pièce en matériau dur, notamment dans la paroi de l'ouverture d'une bielle destinée à être associée à un moteur.

Des procédés d'usinage de bielles sont connus notamment des documents de brevets EP 0 808 228 et EP 0 868 245. Ces documents enseignent l'utilisation de dispositifs lasers pulsés permettant d'usiner une pluralité de trous borgnes dans la paroi d'une bielle de manière à définir une rainure formant amorce de rupture. Selon l'enseignement de ces documents, les trous borgnes sont séparés l'un de l'autre par des parois plus ou moins épaisses et relativement hautes par rapport à la profondeur de la rainure usinée. Dans le document EP 0 868 245, il est prévu que ces parois présentent sensiblement une forme de pic.

Selon l'art antérieur, la largeur transversale de la rainure usinée correspond sensiblement au diamètre du faisceau laser lorsqu'il atteint la surface de la pièce à usiner. Pour limiter la quantité d'énergie nécessaire à l'usinage de la rainure, les impulsions sont fournies à une certaine fréquence et la pièce à usiner subit un déplacement relativement à la tête d'usinage de manière à obtenir la pluralité de trous borgnes susmentionnée. Les parois de séparation entre les trous borgnes peuvent difficilement être éliminées selon l'enseignement de l'art antérieur. En effet, pour avoir une certaine vitesse de production dans l'usinage de rainures à l'aide d'un laser pulsé, l'utilisation de haute fréquence serait nécessaire pour obtenir une rainure sensiblement continue avec les faisceaux laser à géométrie circulaire. La quantité d'énergie nécessaire à l'usinage de rainures suffisamment profondes, généralement supérieures à 0,5 mm, engendrerait des dommages thermiques à la surface d'impact du faisceau laser et aux parois de la rainure usinée, rendant ainsi plus difficile le traitement ultérieur de l'ouverture de la bielle. Ainsi, il y aurait une perte d'énergie et un coût d'usinage supérieur.

Le but de la présente invention est de fournir un procédé d'usinage laser d'amorces de rupture avec un minimum d'énergie laser et une utilisation efficace de cette énergie pour obtenir des rainures étroites et relativement profondes permettant un sectionnement particulièrement propre et efficace, c'est-à-dire à moindre énergie et avec une atteinte minimale de la surface de la pièce usinée. A cet effet, la présente invention a pour objet un procédé d'usinage tel que définit précédemment, caractérisé par le fait que le faisceau laser utilisé pour l'usinage de la rainure dans la pièce en matériau dur présente une section, dans un plan perpendiculaire à la direction de propagation de ce faisceau, dont une première dimension dans le plan de sectionnement de cette pièce, défini par cette direction de propagation et la direction longitudinale de la rainure usinée, est supérieure à la deuxième dimension de ladite section selon la direction perpendiculaire à ce plan de sectionnement.

En particulier, la section transversale du faisceau laser est ovale. De préférence, la première dimension est au moins deux fois supérieure à la deuxième dimension. A noter que cette section peut aussi être rectangulaire.

La présente invention concerne également une installation d'usinage laser de rainures formant amorces de rupture pour la mise en oeuvre du procédé selon l'invention. En particulier, cette installation se caractérise en ce qu'elle comprend des moyens pour fournir en sortie d'une tête d'usinage un faisceau laser présentant une section transversale oblongue avec la petite dimension de cette section orientée perpendiculairement à la direction de déplacement relatif entre la tête d'usinage et la pièce à usiner. En particulier, l'installation laser comprend des éléments optiques modifiant le profil transversal d'intensité lumineuse du faisceau laser, notamment des éléments optiques cylindriques permettant de donner au faisceau laser une section de forme ovale ou ellipsoïdale.

La présente invention sera décrite plus en détail à l'aide de la description suivante, faite en référence au dessin annexé donné à titre d'exemples nullement limitatifs et dans lequel :
- la figure 1 représente schématiquement une installation d'usinage laser selon l'invention;
- la figure 2 est une vue partielle de dessus d'une rainure usinée dans la paroi latérale de l'ouverture d'une bielle selon le procédé de la présente invention;
- la figure 3 est une vue schématique, partielle et en coupe selon une section longitudinale d'une rainure usinée selon une première variante de mise en oeuvre du procédé de l'invention;
- la figure 4 est une coupe similaire à celle de la figure 3 usinée selon une deuxième variante de mise en oeuvre du procédé de l'invention;
- la figure 5 montre en coupe le profil résultant au fond d'une rainure usinée selon la deuxième variante de mise en oeuvre.

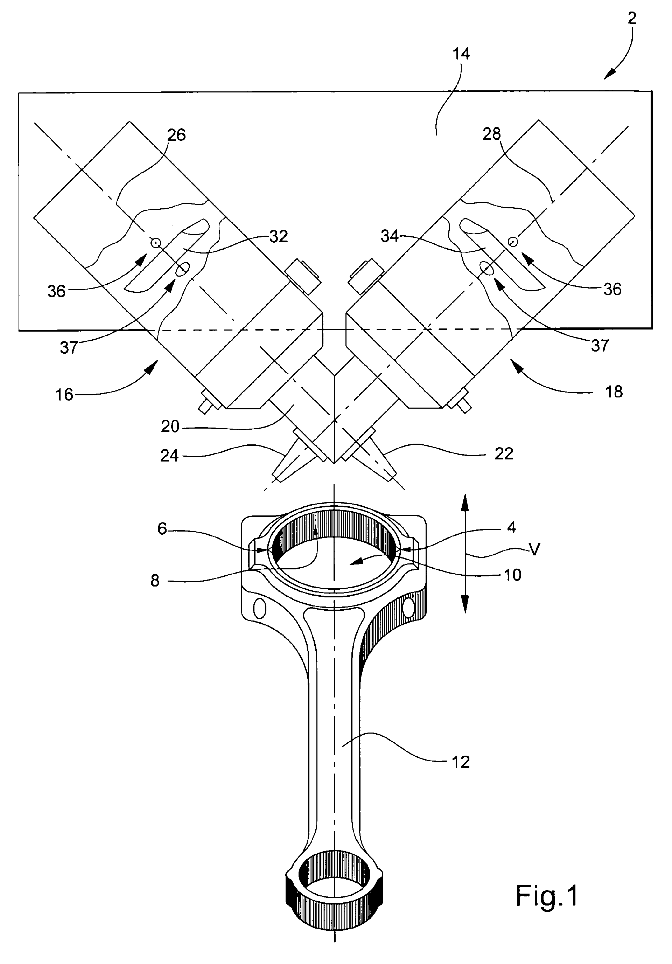

L'installation d'usinage laser 2 selon l'invention représentée schématiquement à la figure 1 est agencée pour usiner des rainures 4 et 6 diamétralement opposées dans la paroi latérale 8 de l'ouverture principale 10 d'une bielle 12. La source laser (non représentée) fournit un faisceau laser pulsé, c'est-à-dire une succession d'impulsions laser avec une fréquence donnée. Le laser pulsé peut notamment être un laser à milieu actif solide pompé par une lampe à décharge ou par diodes, dans un mode libre ou dans un mode avec variation du facteur de qualité Q (Q-Switch). La bielle 12 est portée par un support (non représenté) qui permet un déplacement vertical V de celle-ci relativement aux deux têtes d'usinage 16 et 18 fixées à un carter frontal 14. Une optique connue de l'homme du métier permet de conduire le faisceau laser depuis la source aux têtes d'usinage 16 et 18 qui comprennent chacune une optique de focalisation de ce faisceau laser. Ces deux têtes d'usinage sont reliées entre elles à leur extrémité inférieure par un élément creux 20 qui porte deux buses 22 et 24 par lesquelles sortent deux faisceaux laser se propageant respectivement selon les axes optiques 26 et 28. A noter qu'un gaz de travail permettant d'évacuer la matière fondue est de préférence prévu. Ce gaz sort également par les buses 22 et 24.

Dans le mode de réalisation de l'invention décrit ici, il est prévu d'agencer dans les deux têtes d'usinage 16 et 18 des éléments optiques cylindriques 32 et 34. Ces éléments représentés schématiquement par une lentille cylindrique permettent de varier la forme de la section du faisceau laser. Si le faisceau laser fourni par la source laser présente une section circulaire 36, le faisceau laser incident sur l'optique cylindrique 32, respectivement 34 présente donc une section circulaire 36. Après avoir traversé l'optique 32, respectivement 34, le faisceau laser présente une section 37 sensiblement ovale ou définissant une ellipse. La petite dimension de cette section ou le petit axe principal est perpendiculaire au plan géométrique de sectionnement de la bielle 12, c'est-à-dire au plan défini par la direction de propagation du faisceau laser 26, respectivement 28 et la direction longitudinale de la rainure usinée 4, respectivement 6. Cette direction longitudinale correspond à la direction de l'axe géométrique de l'ouverture circulaire 10 et à la direction du déplacement V. La grande dimension ou le grand axe principal de la section 37 se trouve dans ledit plan de sectionnement.

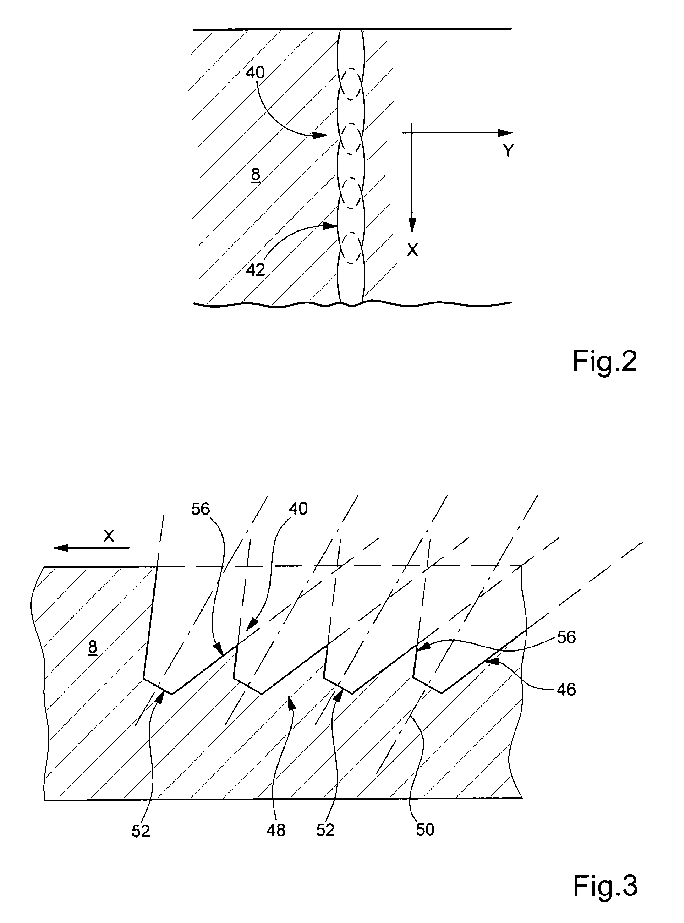

Grâce à l'installation laser selon l'invention, il est possible de distribuer au mieux l'énergie laser selon la direction longitudinale des rainures usinées en limitant ainsi la largeur de la rainure 4, respectivement 6. L'impulsion laser présente donc une surface d'impacts sur la surface latérale 8 dont la dimension selon la direction longitudinale de la rainure est plus grande que la dimension correspondante pour un faisceau laser de section circulaire. Ceci ressort clairement de la figure 2 qui est une vue partielle de dessus d'une rainure 40 obtenue à l'aide de l'installation d'usinage selon la figure 1 avec une mise en oeuvre préférée du procédé d'usinage laser selon l'invention.

On notera que les moyens permettant de modifier la forme de la section transversale du faisceau laser sont connus en tant que tels de l'homme du métier. Plusieurs possibilités s'offrent à celui-ci. Les moyens permettant d'obtenir une section ovale ou oblongue peuvent être prévus soit à l'extérieur de la cavité laser, comme représenté à la figure 1, soit à l'intérieur de cette cavité. Dans ce dernier cas on peut prévoir notamment un miroir cylindrique à une extrémité de la cavité ou un diaphragme à fente. Il est ainsi possible d'engendrer des faisceaux de section oblongue, de forme sensiblement ellipsoïdale ou de forme sensiblement rectangulaire. Une autre possibilité qui s'offre à l'homme du métier pour obtenir un faisceau laser de section oblongue consiste à sélectionner un milieu actif avec une géométrie particulière, par exemple un barreau Nd:YAG présentant une section rectangulaire. Pour ce qui concernent les moyens externes à la cavité pour former le faisceau laser, plusieurs possibilités outre les éléments optiques cylindriques sont envisageables, en particulier des prismes ou des éléments optiques binaires, ou encore des fibres optiques de section non circulaire ou même plusieurs fibres circulaires agencées en ligne (rangée de fibres optiques). Ces exemples sont donnés de manière non-limitative.

L'invention concerne également un procédé d'usinage laser résultant de la mise en oeuvre d'une installation laser selon l'invention. Selon un mode de mise en oeuvre préféré, le procédé d'usinage laser d'une rainure, formant amorce de rupture pour un sectionnement mécanique ultérieur, dans une pièce en matériau dur, notamment dans la paroi 8 de l'ouverture d'une bielle, est caractérisé en ce que le faisceau laser présente une section dans un plan perpendiculaire à la direction de propagation de ce faisceau dont une première dimension dans le plan définit par cette direction de propagation et la direction longitudinale de la rainure usinée est supérieure à la deuxième dimension de ce faisceau selon la direction perpendiculaire à ce plan de sectionnement. Selon une variante préférée, ladite première dimension est au moins deux fois supérieure à ladite deuxième dimension.

A la figure 2 est représenté schématiquement les surfaces d'impacts 42 d'une pluralité d'impulsions successives dans la paroi latérale 8 d'une bielle. A titre d'exemple, la dimension longitudinale selon l'axe X de la surface 42 est sensiblement égal à trois fois la dimension transversale selon l'axe Y de cette surface d'impact. On remarquera que les dimensions de la surface d'impact 42 dépendent non seulement de la section des impulsions laser, mais également de l'angle d'incidence du faisceau laser sur la surface d'usinage. Dans le cas de l'installation laser représentée à la figure 1, cet angle d'incidence est d'environ 45°. Ainsi, un facteur trois entre les dimensions des deux axes principaux de la surface d'impacts 42 correspond à une section transversale du faisceau laser dont le rapport entre les deux axes principaux est d'un peu supérieur à deux. De préférence, l'angle d'incidence pour l'usinage dans l'ouverture d'une bielle est sélectionnée dans la plage de 30° à 60°. Selon le mode préféré de mise en oeuvre du procédé de l'invention, la vitesse relative du déplacement de la pièce usinée par rapport à une tête d'usinage de l'installation laser et la fréquence à laquelle la source laser fournit les impulsions sont déterminées de manière que les surfaces d'impact 42 de deux impulsions successives se superposent au moins partiellement. Il est donc prévu un recouvrement partiel des surfaces d'impact de manière à définir une rainure traversante au moins dans la partie supérieure de cette rainure. Grâce au procédé de l'invention, il est donc possible d'obtenir une rainure sensiblement continue avec une profondeur d'environ 1 mm à l'aide d'un laser d'une puissance moyenne inférieure à 100 Watt pour une vitesse de déplacement relatif entre la bielle et la tête d'usinage de l'ordre de un mètre par minute (1 m/min.).

A la figure 3 est représenté une première variante du mode de mise en oeuvre préféré du procédé selon l'invention. Sur cette figure 3, on a représenté schématiquement le profil longitudinal 46 dans le fond 48 de la rainure 40. Etant donné que le faisceau laser présente une section transversale de forme oblongue, chaque impulsion laser définit en fond de rainure une certaine longueur d'usinage 52. Selon la variante de la figure 3, les surfaces d'impact des impulsions laser successives sont partiellement superposées comme représenté à la figure 2. Les deux longueurs d'usinage 52 en fond de rainure 48 engendrées par deux impulsions laser successives sont séparées l'une de l'autre par un pic de matière 56 dont la hauteur reste relativement peu élevée. Cette variante de mise en oeuvre permet d'obtenir des rainures dont la partie supérieure est traversante à l'aide d'un faisceau laser pulsé à relativement basse fréquence. L'énergie apportée essentiellement selon la direction longitudinale X de la rainure permet d'obtenir une bonne amorce de rupture à moindre énergie laser pour une vitesse d'usinage donnée.

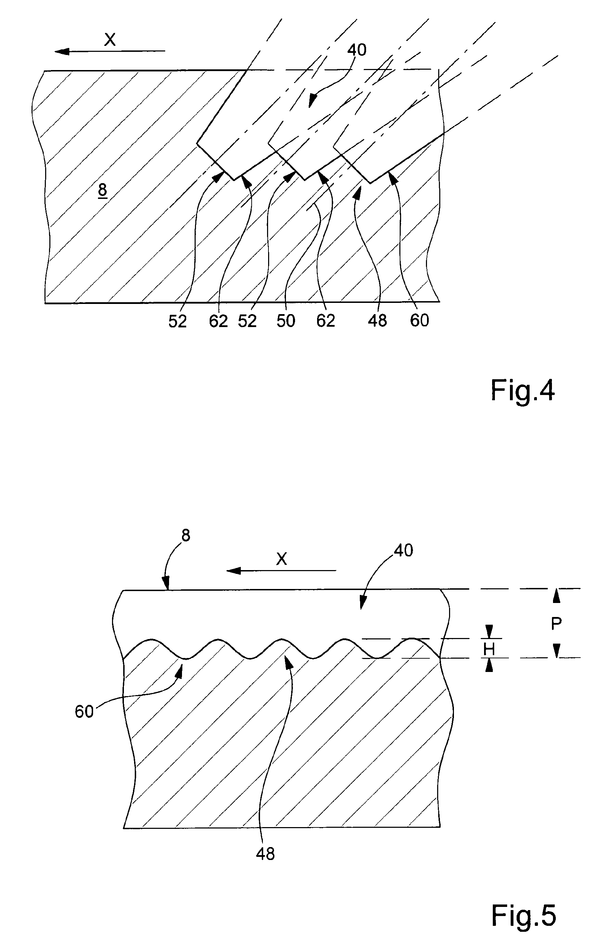

A la figure 4 est représenté schématiquement le profil d'usinage 60 d'une rainure 40 selon la direction longitudinale X de cette dernière et résultant d'une deuxième variante du mode de mise en oeuvre préféré du procédé de l'invention. Selon cette deuxième variante, deux longueurs d'usinage 52 en fond de rainure 48 engendrées par deux impulsions successives présentent entre elles une transition 62 sensiblement monotone, c'est-à-dire que ces deux longueurs d'usinage sont reliées par un segment du profil 60 sans pic matériel de séparation des deux trous oblongs engendrés par ces deux impulsions laser successives. La vitesse du déplacement entre la tête d'usinage et la pièce usinée ainsi que la fréquence des impulsions laser sont sélectionnées de manière à définir une rainure relativement profonde sans paroi de séparation entre les trous oblongs engendrés par les impulsions laser. On remarquera que la représentation linéaire des longueurs d'usinage 52 en fond de rainure est relativement théorique. Il est possible de définir cette longueur comme étant la longueur du profil en fond de rainure résultant d'une même impulsion laser dont la variation selon la direction de propagation ou d'incidence 50 du faisceau laser varie peu et présentant seulement une légère courbure. La longueur d'usinage obtenue selon les cas peut par exemple varier entre 20µs et 1 mm.

La figure 5 représente de manière plus réelle un profil 60 de la rainure 40 obtenu par la deuxième variante de mise en oeuvre du procédé de l'invention dans le cas d'une incidence oblique du faisceau laser sur la surface usinée 8. On obtient un profil d'usinage 60 en fond de rainure 40 selon la direction longitudinale X définissant une certaine ondulation d'amplitude totale H. Selon une variante spécifique du procédé selon l'invention, la hauteur H de l'ondulation en fond de rainure est inférieure ou sensiblement égale à 20 % de la profondeur P de la rainure 40. Le procédé selon l'invention permet d'obtenir de telles rainures quasi continues en utilisant des sources laser similaires à celles prévues dans l'art antérieur mentionné au début de la présente description, ces rainures présentant notamment une largeur sensiblement égale ou inférieure à 0,1 mm et une profondeur sensiblement égale ou supérieure à 0,5 mm. De préférence, le rapport profondeur/largeur est supérieure à cinq. Ainsi, les rainures formant amorces de rupture obtenues à l'aide du procédé selon l'invention présentent une profondeur relativement élevée pour une largeur de rainure relativement petite. De plus, le procédé selon l'invention permet d'obtenir de telles rainures essentiellement traversantes selon la direction longitudinale de celle-ci. Ces rainures sont particulièrement efficace pour obtenir un sectionnement mécanique ultérieur propre selon le plan de sectionnement et avec un impact minimum sur la surface usinée.

## Revendications

1. Procédé d'usinage au moyen d'une installation laser (2) d'une rainure (40), formant amorce de rupture pour un sectionnement mécanique ultérieur, dans une pièce (12), notamment dans la paroi (8) de l'ouverture (10) d'une bielle, ladite rainure définissant une direction longitudinale (X) et une direction transversale (Y), ladite installation laser étant agencée pour fournir en sortie d'une tête d'usinage un faisceau laser se propageant selon une direction de propagation déterminée (26; 28; 50), **caractérisé en ce que** ledit faisceau laser présente une section dans un plan perpendiculaire à ladite direction de propagation dont une première dimension dans un plan de sectionnement, défini par cette direction de propagation et par ladite direction longitudinale de ladite rainure, est supérieure à une deuxième dimension de ladite section selon la direction perpendiculaire à ce plan de sectionnement.

2. Procédé selon la revendication 1, **caractérisé en ce que** ladite première dimension est au moins deux fois supérieure à ladite deuxième dimension.

3. Procédé selon la revendication 1 ou 2, **caractérisé en ce que** ladite section dudit faisceau laser est sensiblement ellipsoïdale ou rectangulaire.

4. Procédé selon l'une des revendications précédentes, **caractérisé en ce que** ladite pièce (12) en matériau dur subit un déplacement à une vitesse déterminée relativement à une tête (16; 18) de ladite installation laser (2) fournissant ledit faisceau laser, ce faisceau laser étant fourni sous forme d'une pluralité d'impulsions avec une fréquence donnée, chaque impulsion définissant une surface d'impact (42) sur la surface usinée (8) de ladite pièce (12) et une certaine longueur d'usinage (52) dans le fond (48) de ladite rainure (40).

5. Procédé selon la revendication 4, **caractérisé en ce que** ladite vitesse de déplacement et ladite fréquence du faisceau laser pulsé sont sélectionnées de manière que les surfaces d'impacts (42) de deux impulsions successives se superposent au moins partiellement, ladite rainure ayant une certaine profondeur (P) et présentant à son fond un profil longitudinal (46; 60) d'une certaine amplitude (H).

6. Procédé selon la revendication 5, **caractérisé en ce que** ladite vitesse de déplacement et ladite fréquence du faisceau laser pulsé sont sélectionnées de manière que les deux longueurs d'usinage au fond de la rainure de deux impulsions successives présentent entre elles une transition sensiblement monotone.

7. Procédé selon la revendication 5 ou 6, dans lequel il est prévu que ladite direction de propagation (50) dudit faisceau laser soit oblique relativement à la surface usinée (8), **caractérisé en ce que** ledit fond (48) de ladite rainure (40) selon sa direction longitudinale (X) présente un profil ondulé (60).

8. Procédé selon l'une des revendications 5 à 7, **caractérisé en ce que** ladite amplitude (H) dudit profil longitudinal (60) est sensiblement égal ou inférieur à 20 % de ladite profondeur (P) de ladite rainure (40).

9. Procédé selon l'une des revendications 5 à 8, **caractérisé en ce que** ladite rainure (40) présente une largeur selon ladite direction transversale (Y) qui est sensiblement égale ou inférieur à 0,1 mm.

10. Procédé selon l'une des revendications 5 à 9, **caractérisé en ce que** ladite profondeur (P) de ladite rainure (40) est supérieure ou sensiblement égale à 0,5 mm, le rapport profondeur/largeur de cette rainure étant supérieur ou égal à cinq.

11. Installation d'usinage laser (2) de rainures (40), formant amorces de rupture pour un sectionnement mécanique ultérieur, dans des pièces (12) en matériau dur, notamment dans la paroi (8) d'une bielle (12), cette installation comprenant une cavité laser formant une source d'énergie laser et au moins une tête d'usinage (16, 18) fournissant à sa sortie au moins un faisceau laser, cette installation comprenant également un support pour lesdites pièces, ce support et ladite tête étant agencés pour subir un déplacement l'un relativement à l'autre selon une direction d'usinage (V) lors de l'usinage desdites rainures,
**caractérisée en ce que** ledit faisceau laser présente une section dans un plan perpendiculaire à ladite direction de propagation dont une première dimension dans un plan de sectionnement, défini par cette direction de propagation et par ladite direction d'usinage, est supérieur à une deuxième dimension de cette section selon la direction perpendiculaire à ce plan de sectionnement.

12. Installation selon la revendication 11, **caractérisée en ce qu'**elle comprend des moyens externes à ladite cavité laser pour former ladite section dudit faisceau laser sortant de ladite tête d'usinage.

13. Installation selon la revendication 11, **caractérisée en ce qu'**elle comprend des moyens internes à ladite cavité laser pour former ladite section dudit faisceau laser sortant de ladite tête d'usinage.

14. Installation selon la revendication 12, **caractérisée en ce que** lesdits moyens externes sont formés par au moins un élément optique cylindrique (32; 34).

15. Installation selon la revendication 13, **caractérisée en ce que** lesdits moyens internes sont formés par un diaphragme à ouverture non circulaire, par un miroir cylindrique, ou par un milieu actif de section rectangulaire.
